# EUROPEAN PATENT APPLICATION

(11) **EP 4 632 929 A1**
(43) Date of publication of application: **15.10.2025**
(21) Application number: 23932798.4
(22) Date of filing: 22.11.2023
(51) Int. Cl.: H01M 50/40, H01M 50/409, H01M 10/05

(54) **SEPARATOR FILM AND PREPARATION METHOD THEREFOR, AND BATTERY AND ELECTRIC DEVICE**

(30) Priority: 11.04.2023 CN 202310383440
(71) Applicant: Contemporary Amperex Technology Co., Limited, Ningde, Fujian 352100 (CN)
(72) Inventor: MU, Xueying, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN)
(74) Representative: Kraus & Lederer PartGmbB
(86) International application number: PCT/CN2023/133392
(87) International publication number: WO 2024/212527

(57) **Abstract**

Disclosed in the present application are a separator film and a preparation method therefor, and a battery and an electric device. The separator film comprises a first base film, a second base film, and a coating located between the first base film and the second base film, wherein the coating includes ceramic and a fire retardant. In the separator film of the present application, by means of the composite of a first base film and a second base film, the mechanical strength of the separator film can be improved, and ceramic and fire retardant coating particles are protected from falling off easily; and on the basis of the combined action of ceramic and a fire retardant in a coating, not only can the ionic conductivity of the separator film be improved, but the high-temperature resistance of the separator film can also be improved, such that when such a separator film is applied to a battery, the capacity retention rate, safety performance and service life of the battery can be significantly improved.

## Description

The present application claims priority to Chinese Patent Application No. 202310383440.9 entitled "SEPARATOR AND PREPARATION METHOD THEREFOR, AND BATTERY AND ELECTRIC DEVICE" and filed with China National Intellectual Property Administration on April 11, 2023, which is incorporated herein by reference in its entirety.

### TECHNICAL FIELD

The present application belongs to the technical field of battery materials, and particularly, to a separator and a preparation method therefor, a battery, and an electric device.

### BACKGROUND

A battery separator film (BSF), also called a battery separator, is one of the core materials in a battery. The separator is positioned between the positive electrode and the negative electrode of a battery, and its main function is to separate the active materials of the positive and negative electrodes of the battery to reduce the risk of short circuits caused by contact thereof while allowing the passage of current-carrying ions in the electrolyte to form a charge-discharge circuit. Therefore, the separator has an important influence on the safety and the cost of batteries.

At present, common separator materials in the market have low melting points and are prone to thermal runaway, and the ionic conductivity of the separator is easily influenced due to poor wettability, such that the service performance and the service life of a battery are influenced.

### SUMMARY

In view of the above problems, the present application provides a separator and a preparation method therefor, a battery, and an electric device and aims to solve the technical problem of how to improve the ionic conductivity and the use safety of separators.

In a first aspect, embodiments of the present application provide a separator. The separator includes a first base film, a second base film, and a coating positioned between the first base film and the second base film, and the coating contains ceramic and a flame retardant.

By applying the ceramic and flame retardant materials to the coating between the first base film and the second base film, the overall mechanical strength of the separator can be improved by utilizing the composite action of the first base film and the second base film, and the double layer protection makes the ceramic and the flame retardant not prone to fall off, such that the risk of powder falling is reduced; since the ceramic in the coating has good wettability and heat resistance, not only can the electrolyte absorption and retention capabilities of the separator be improved to improve the ionic conductivity, but also the high temperature resistance of the separator can be improved under the combined action of the ceramic and the flame retardant. Therefore, the separator provided in the embodiments of the present application can significantly improve the battery's capacity retention rate, safety performance, and service life when used in batteries.

In some embodiments, the ceramic includes ceramic particles with an average particle size of 0.01 µm to 1 µm; and/or
the flame retardant includes flame-retardant particles with an average particle size of 0.02 µm to 2 µm.

The ceramic particles with an average particle size of 0.01 µm to 1 µm and the flame-retardant particles with an average particle size of 0.02 µm to 2 µm can be uniformly dispersed in the coating, such that the coating can be compact and smooth and also has good air permeability.

In some embodiments, the ceramic includes ceramic particles with an average particle size of 0.05 µm to 0.5 µm; and/or
the flame retardant includes flame-retardant particles with an average particle size of 0.05 µm to 1 µm.

The ceramic particles with an average particle size of 0.05 µm to 0.5 µm and the flame-retardant particles with an average particle size of 0.05 µm to 1 µm can enable the coating to have good comprehensive effect with respect to the dispersibility and air permeability.

In some embodiments, the material of the ceramic includes at least one of boehmite, aluminum oxide, barium sulfate, magnesium oxide, magnesium hydroxide, silica, tin dioxide, titanium oxide, calcium oxide, zinc oxide, zirconium oxide, yttrium oxide, cerium oxide, zirconium titanate, barium titanate, and magnesium fluoride; and/or
the flame retardant includes at least one of a metaborate salt, an orthoborate salt, and a polyborate salt.

In one aspect, the above ceramic materials can improve the heat resistance of the separator; in another aspect, the above borate flame retardants can bind to anions in the electrolyte to some extent, such that the anions can be inhibited from migrating in the separator; meanwhile, in the flame retardant, the interaction of polar bonds with boron-containing Lewis acidic anions can facilitate the desolvation of electrolyte ions. Therefore, the ion mobility and heat-resistant safety performance of the separator can be further remarkably improved through the combination of the above ceramic material and borate flame retardant in the coating.

In some embodiments, the metaborate salt includes at least one of calcium metaborate, barium metaborate, sodium metaborate, and ammonium metaborate; or
the orthoborate salt includes zinc borate; or
the polyborate salt includes at least one of ammonium pentaborate and sodium tetraborate.

The selection of the kind of the metaborate salt, the orthoborate salt, and the polyborate salt can be combined with the ceramic material to significantly improve the ion mobility of the separator.

In some embodiments, the mass ratio of the ceramic to the flame retardant is greater than or equal to 1.05.

Allowing the ceramic and the flame retardant to be used in the coating between the first base film and the second base film according to a mass ratio thereof of greater than or equal to 1.05 can enable the separator to exhibit good comprehensive effect with respect to overall wettability and heat resistance.

In an embodiment, the mass ratio of the ceramic to the flame retardant is (1.05-9):1.

Allowing the ceramic and the flame retardant to be used in the coating between the first base film and the second base film according to a mass ratio thereof of (1.05-9):1 can enable the separator to exhibit better comprehensive effect with respect to overall wettability and heat resistance.

In an embodiment, the base materials of the first base film and the second base film each independently include at least one of a polyolefin material, a fluoropolymer material, and a polyester material.

At least one of the polyolefin material, the fluoropolymer material, and the polyester material is used as the main polymer material of the base material of the separator, such that the separator has good insulating property, can form a microporous structure, and can have air permeability and porosity required by the industry, thereby providing a good migration channel for ions of the electrolyte and enabling the battery to stably and efficiently operate.

In some embodiments, the porosity of the first base film is greater than the porosity of the second base film.

The porosity difference between the first base film and the second base film not only ensures the mechanical strength of the separator, but also facilitates improved ion mobility.

In some embodiments, the ratio of the porosity of the first base film to the porosity of the second base film is greater than or equal to 1.02; and/or
the porosity of the first base film is 32% to 90%, and the porosity of the second base film is 30% to 85%.

Combining the first base film with a porosity of 32% to 90% and the second base film with a porosity of 30% to 85% described above not only facilitates ion migration, but also enables the separator to exhibit excellent overall air permeability and mechanical property.

In some embodiments, the porosity of the first base film is 35% to 85%, and the porosity of the second base film is 34% to 45%.

Combining the first base film with a porosity of 35% to 85% and the second base film with a porosity of 34% to 45% described above can enable the separator to exhibit good comprehensive effect with respect to overall mechanical property, air permeability, and ion mobility.

In some embodiments, the thickness of the first base film is greater than the thickness of the second base film.

By using the thickness difference between the first base film and the second base film, the overall mechanical strength of the separator can be well balanced, enabling the separator to be used for a long time in a battery.

In some embodiments, the ratio of the thickness of the first base film to the thickness of the second base film is (1.02-5.0):1; and/or
the thickness of the first base film is 2 µm to 13 µm, and the thickness of the second base film is 1 µm to 12 µm.

Combining the first base film with a thickness of 2 µm to 13 µm and the second base film with a thickness of 1 µm to 12 µm described above not only allows the whole separator to exhibit good mechanical property, but also allows the ceramic and the flame retardant in the coating in the middle to be well protected and thereby not prone to fall off.

In some embodiments, the thickness of the first base film is 3 µm to 6 µm, and the thickness of the second base film is 2 µm to 5 µm.

Combining the first base film with a thickness of 3 µm to 6 µm and the second base film with a thickness of 2 µm to 5 µm described above not only allows the separator to exhibit good overall mechanical property and allows the ceramic and the flame retardant in the coating in the middle to be not prone to fall off, but also can greatly improve the energy density of the battery when used in the battery.

In some embodiments, the thickness of the coating is 0.5 µm to 10 µm.

Allowing the thickness of the coating between the first base film and the second base film to be 0.5 µm to 10 µm can enable the separator to exhibit good comprehensive effect with respect to overall wettability and heat resistance.

In some embodiments, the thickness of the coating is 1 µm to 5 µm.

Allowing the thickness of the coating between the first base film and the second base film to be 1 µm to 5 µm can enable the separator to exhibit good comprehensive effect with respect to overall wettability and heat resistance and also to exhibit excellent overall air permeability.

In some embodiments, the coating further includes a binder.

By using the binder in the intermediate layer, the binder can bind and fix the ceramic and the flame retardant in the coating, such that the ceramic and the flame retardant do not easily fall off.

In some embodiments, the binder includes at least one of polyacrylate, an acrylic acid, and carboxymethyl cellulose; and/or
the mass ratio of the binder to the ceramic is (0.01-0.3):1.

The above types of binders exhibit excellent adhesion. Under the above ratio conditions, the binder demonstrates strong adhesion to the ceramic in the coating, while having a small influence on the thickness of the coating.

In a second aspect, embodiments of the present application provide a preparation method for the above separator. The preparation method includes the following steps:
formulating a slurry containing ceramic and a flame retardant; and
applying the slurry on the surface of a first base film to form a slurry coating, then covering the slurry coating with a second base film, and performing lamination treatment to obtain the separator.

A wet coating film forming process is adopted to apply the slurry containing the ceramic and the flame retardant on the surface of the first base film to form a slurry coating, then the slurry coating is covered with the second base film, and lamination treatment is performed to obtain the separator according to the embodiments of the present application. Such a preparation method not only features simple process and low preparation cost, but also can result in a separator with excellent ionic conductivity and high temperature resistance.

In some embodiments, the step of formulating the slurry containing the ceramic and the flame retardant includes: dissolving the ceramic and the flame retardant in water, adding a binder, and stirring to obtain the slurry.

The addition of the binder to the slurry can provide the slurry with good viscosity, and the ceramic and the flame retardant in the slurry can be better bonded to form a film between the first base film and the second base film.

In some embodiments, the binder includes at least one of polyacrylate, an acrylic acid, and carboxymethyl cellulose; and/or
the mass ratio of the binder to the ceramic is (0.01-0.3):1.

The above types of binders exhibit excellent viscosity, such that the ceramic and the flame retardant in the middle of the final separator do not easily fall off. Under the above ratio conditions, the adhesion effect is good, and meanwhile the influence on the thickness of the final coating is small.

In some embodiments, in the slurry, the mass concentration of the ceramic is 50% to 90%, and the mass concentration of the flame retardant is 10% to 50%.

In the slurry with the above mass concentration, the ceramic and the flame retardant are uniformly dispersed, and the prepared slurry has good viscosity and can be easily applied to form a film.

In a third aspect, embodiments of the present application provide a battery. The battery includes a positive electrode, a negative electrode, and a separator disposed between the positive electrode and the negative electrode, and the separator is the separator provided by the first aspect of the embodiments of the present application and/or the separator prepared by using the preparation method provided by the second aspect of the embodiments of the present application.

By using the separator provided by the first aspect of the embodiments of the present application and/or the separator prepared by using the preparation method provided by the second aspect of the embodiments of the present application in a battery, the battery can have an excellent capacity retention rate and meanwhile has excellent safety performance and service life based on the high ionic conductivity and the remarkable high temperature resistance of the separator.

In some embodiments, the battery includes a secondary battery.

The secondary battery has high energy density and good cycle stability. Based on the characteristics of the separator, such a secondary battery can be well used in the power source field of power batteries or energy storage systems.

In a fourth aspect, embodiments of the present application provide an electric device. The electric device includes the battery provided by the third aspect of the present application.

By adopting the battery provided by the third aspect of the embodiments of the present application, the capacity retention rate of the electric device is high, the service life is long, and the electric device can work for a longer time.

The above descriptions are merely a summary of the technical solutions of the present application. To make the technical means of the present application more clearly understood and implemented according to the content of the specification, and to make the above and other objectives, features, and advantages of the present application more apparent and comprehensible, specific implementations of the present application are described in detail below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a separator according to an embodiment of the present application;
FIG. 2 is a schematic flow chart of a preparation method for a separator according to an embodiment of the present application;
FIG. 3 is a schematic structural diagram of an implementation of a secondary battery according to an embodiment of the present application;
FIG. 4 is an exploded schematic diagram of the secondary battery shown in FIG. 3;
FIG. 5 is a schematic structural diagram of an implementation of a battery module according to an embodiment of the present application;
FIG. 6 is a schematic structural diagram of an implementation of a battery pack according to an embodiment of the present application;
FIG. 7 is an exploded schematic structural diagram of the battery pack shown in FIG. 6; and
FIG. 8 is a schematic diagram of an implementation of an electric device including the battery according to an embodiment of the present application as a power source.

### Description of the reference numerals:

11-first base film; 12-second base film; 13-coating; 20-battery cell; 21-housing; 22-top cover assembly; 23-electrode assembly; 30-battery module; 40-battery pack; 41-upper case body; 42-lower case body.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to no less than two (including two). Similarly, "plurality of groups" refers to no less than two (including two) groups, and "plurality of pieces" refers to no less than two (including two) pieces. "At least one" means no less than one (including one, two, three, etc.).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted devices or elements must have specific directions or must be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

Against the backdrop of the era of energy conservation and emission reduction, new energy technologies have developed rapidly, with research breakthroughs and applications in battery technology being particularly prominent. In ion batteries such as lithium-ion batteries, the battery separator is one of the key components.

A separator is a microporous membrane used to isolate the positive and negative electrodes and it is a polymeric functional material with a nanoscale microporous architecture. Its main function is to separate the active materials of the positive and negative electrodes of the battery to reduce the risk of short circuits caused by contact thereof while allowing the passage of electrolyte ions. The performance of the separator determines the battery's interface structure, internal resistance, and the like, directly impacting the capacity, cycle life, and safety performance of the battery.

Although the conventional separators on the market at present have relatively good mechanical property, they have relatively low surface polarity, such that the electrolyte absorption and retention capabilities are poor, and the ionic conductivity of the separator is influenced. When such a separator is used in a battery, the ion migration of the battery is influenced in the charging and discharging processes, such that the internal resistance of the battery is increased, and the service life of the battery is seriously influenced. Meanwhile, conventional separator materials have low melting points. During battery charging and discharging processes, heat is generated, particularly during short circuits or overcharging when a significant amount of heat is released. Consequently, when the temperature rises, separators with low melting points are prone to thermal runaway.

In practical applications, technicians typically modify and slightly change the separator. For example, a ceramic coating is applied on the surface of the separator, and although the ceramic coating can improve the wettability of the separator against the electrolyte to some extent, the ceramic is prone to powder falling, thereby affecting the stability of the separator. Although a flame retardant is used in the separator at present, the flame retardant is generally used in the separator base film, namely the flame retardant and the base material are mixed to prepare the base film. However, this approach offers only limited improvement in the wettability of the base film.

In view of the above, in order to overcome the defects of the separator, embodiments of the present application design a separator using ceramic and a flame retardant in a coating between a first base film and a second base film. By utilizing the protective effects of the first base film and the second base film on both the ceramic and flame retardant, as well as the enhancement of ionic conductivity and high temperature resistance achieved by the combination of the ceramic and flame retardant, the separator provided in the embodiments of the present application can significantly improve the battery's capacity retention rate, safety performance, and service life when used in batteries.

The following technical solutions are thereby proposed.

### Separator

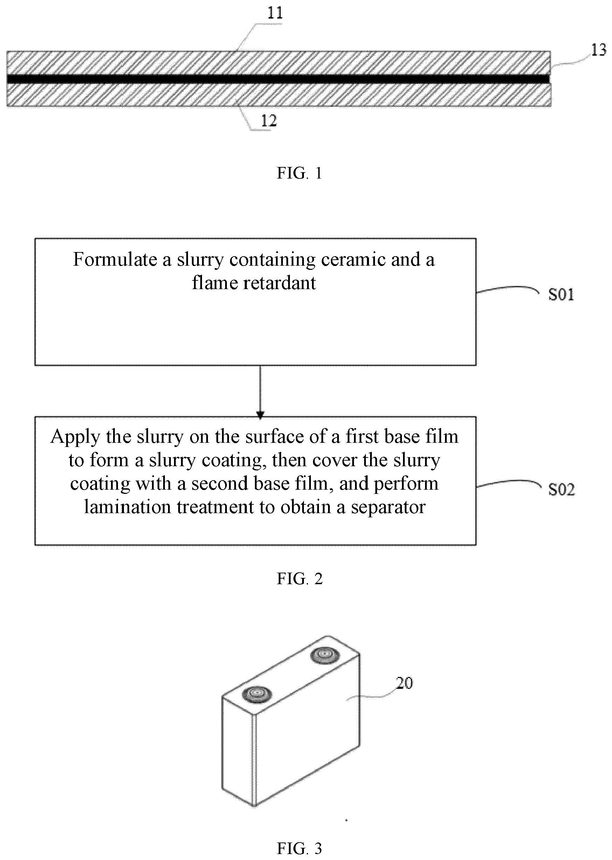

In a first aspect, embodiments of the present application provide a separator. Referring to FIG. 1, the separator includes a first base film 11, a second base film 12, and a coating 13. The coating 13 is positioned between the first base film 11 and the second base film 12, and the coating 13 contains ceramic and a flame retardant.

The first base film 11 and the second base film 12 refer to base films made of a separator base material. The separator base material is generally a high polymer material, and the separator base material as a body material can be made into a base film with a microporous structure, such that mechanical properties, electrochemical properties and the like required by a battery separator can be met.

The coating 13 is a functional layer formed by coating on a surface of the first base film 11 opposite to the second base film 12 or a surface of the second base film 12 opposite to the first base film 11. The coating 13 is positioned between the first base film 11 and the second base film 12, and the first base film 11, the coating 13, and the second base film 12, as three layers, are laminated to form the separator. Ceramic and flame retardant functional materials are used in the coating 13. The ceramic has good thermal stability, such that the heat resistance of the separator can be improved, the mechanical strength can be enhanced, the contractibility of the separator can be reduced, and the wettability and the electrolyte retention property of the separator can be improved as well. The flame retardant has flame retardancy, and the heat resistance of the separator can be further improved when the flame retardant is used in combination with the ceramic having thermal stability in the coating 13.

According to the embodiments of the present application, by applying the ceramic and flame retardant materials to the coating 13 between the first base film 11 and the second base film 12, the overall mechanical strength of the separator can be improved by utilizing the composite action of the double-layered structure formed by stacking the first base film 11 and the second base film 12, and the ceramic and the flame retardant in the coating 12 are not prone to fall off, such that the risk of powder falling of the separator is reduced. Meanwhile, since the ceramic in the coating 13 has good wettability and heat resistance, not only can the electrolyte absorption and retention capabilities of the separator be improved to improve the ionic conductivity, but also the high temperature resistance of the separator can be improved under the combined action of the ceramic and the flame retardant. Therefore, the separator provided in the embodiments of the present application can significantly improve the battery's capacity retention rate, safety performance, and service life when used in batteries.

The ceramic in the coating 13 may be ceramic powders, and the ceramic powders may be an aggregate composed of many small ceramic particles; the flame retardant may be flame retardant powders, and the flame retardant powders may be an aggregate composed of many small flame-retardant particles.

In some embodiments, the average particle size is a measure of the geometric size of the population of dispersed solid particles, and the average particle size is referred to herein as D50, which refers to the particle size corresponding to the 50% cumulative particle size distribution of a sample. The ceramic includes ceramic particles with an average particle size of 0.01 µm to 1 µm; in an exemplary embodiment, the average particle size of the ceramic may be such a typical but non-limiting average particle size as 0.01 µm, 0.05 µm, 0.1 µm, 0.2 µm, 0.3 µm, 0.5 µm, 0.6 µm, 0.8 µm, or 1 µm. The flame retardant includes flame-retardant particles with an average particle size of 0.02 µm to 2 µm; in an exemplary embodiment, the average particle size of the flame-retardant particles may be such a typical but non-limiting average particle size as 0.02 µm, 0.05 µm, 0.1 µm, 0.2 µm, 0.3 µm, 0.5 µm, 0.6 µm, 0.8 µm, 1 µm, 1.2 µm, 1.5 µm, 1.8 µm, or 2 µm.

In the coating 13, the ceramic particles with an average particle size of 0.01 µm to 1 µm and the flame-retardant particles with an average particle size of 0.02 µm to 2 µm, after being combined, have good dispersibility and can be uniformly dispersed in the coating 13, such that the coating 13 has good smoothness and the coating 13 also has good air permeability.

In some embodiments, the ceramic includes ceramic particles with an average particle size of 0.05 µm to 0.5 µm; the flame retardant includes flame-retardant particles with an average particle size of 0.05 µm to 1 µm. Using the ceramic particles with an average particle size of 0.05 µm to 0.5 µm and the ceramic particles with an average particle size of 0.05 µm to 1 µm in the coating 13 can enable the coating 13 to have good comprehensive effect with respect to the overall dispersibility and air permeability.

In some embodiments, the material of the ceramic includes at least one of (γ-AlOOH), aluminum oxide (Al₂O₃), barium sulfate (BaSO₄), magnesium oxide (MgO), magnesium hydroxide (Mg(OH)₂), silica (SiO₂), tin dioxide (SnO₂), titanium oxide (TiO₂), calcium oxide (CaO), zinc oxide (ZnO), zirconium oxide (ZrO₂), yttrium oxide (Y₂O₃), cerium oxide (CeO₂), zirconium titanate (ZrTiO₃), barium titanate (BaTiO₃), and magnesium fluoride (MgF₂); the flame retardant includes at least one of a metaborate salt, an orthoborate salt, and a polyborate salt.

The metaborate salt, the orthoborate salt, and the polyborate salt may be collectively referred to as borate flame retardants. The borate flame retardant can bind to anions to some extent, such that the anions can be inhibited from migrating in the separator. Meanwhile, boron-containing anions (namely metaborate ions, orthoborate ions, and polyborate ions) in the borate flame retardant above exhibit Lewis acidity, enabling them to interact with polar bonds (denoted as X-O, where X represents cations such as Ca²⁺, Ba²⁺, NH⁴⁺, Mg²⁺, Na⁺, and Zn²⁺) and thereby facilitate the desolvation of electrolyte ions. Therefore, the ion mobility in the separator can be further remarkably improved through the combination of the ceramic material and the borate flame retardant in the coating 13.

In some embodiments, the metaborate salt includes at least one of calcium metaborate (CaB₂O₄), barium metaborate (BaB₂O₄), sodium metaborate (NaBO₂), and ammonium metaborate (NH₄BO₂); the orthoborate salt includes zinc borate (B₂O₆Zn₃); the polyborate salt includes at least one of ammonium pentaborate (NH₄B₅O₈) and sodium tetraborate (Na₂B₄O₇). The selection of the kind of the metaborate salt, the orthoborate salt, and the polyborate salt can be combined with the ceramic material to significantly improve the ion mobility and the heat-resistant safety performance of the separator.

In some embodiments, the mass ratio of the ceramic to the flame retardant is greater than or equal to 1.05. Allowing the ceramic and the flame retardant to be used in the coating 13 according to a certain mass ratio can enable comprehensive utilization of the properties of the ceramic and the flame retardant, and allowing the ceramic and the flame retardant to be used in the coating 13 between the first base film 11 and the second base film 12 according to a mass ratio thereof of greater than or equal to 1.05 can enable the separator to exhibit good comprehensive effect with respect to overall wettability and heat resistance.

In some embodiments, the mass ratio of the ceramic to the flame retardant is (1.05-9):1. In an exemplary embodiment, the mass ratio of the ceramic to the flame retardant may be 1.05:1, 1.5:1, 2.0:1, 2.5:1, 3.0:1, 3.5:1, 3.8:1, 4.0:1, 5.0:1, 7.0:1, 9.0:1, or the like. Allowing the ceramic and the flame retardant to be used in the coating 13 according to a mass ratio thereof of (1.05-9):1 can result in better comprehensive effect of the separator with respect to the overall wettability and heat resistance.

In some embodiments, the base materials of the first base film 11 and the second base film 12 may be the same or different and specifically include at least one of a polyolefin material, a fluoropolymer material, and a polyester material. (1) The polyolefin material may include at least one of polyethylene (PE) and polypropylene (PP); the polyethylene and the polypropylene are characterized by low price, excellent mechanical property, and high electrochemical stability, most of commercialized lithium ion battery separator products are microporous membranes prepared from polyolefin materials, the main raw materials are polyethylene and the polypropylene with high molecular weight, and such polyolefin materials have the advantages of high strength, good acid and alkali corrosion resistance, waterproofing property, and the like, and feature mature industrial production processes and broad commercial applications. (2) The fluoropolymer material may include at least one of polytetrafluoroethylene, polyvinyl fluoride, and polyvinylidene fluoride; the fluoropolymer material exhibits excellent polarity and dielectric constant, and the above fluoropolymer materials, when used in batteries, can significantly improve the electrolyte wettability of the separator, with polyvinylidene fluoride being the most widely applied. (3) The polyester material may include polyethylene terephthalate. The polyethylene terephthalate, a polyester material, exhibits excellent electrolyte corrosion resistance. Therefore, the kind of the base material of the polymer base film can be selected according to actual needs.

In some embodiments, the porosity of the first base film 11 is greater than the porosity of the second base film 12. Porosity affects the mechanical property and the air permeability of the material, and also affects the ion mobility. According to the embodiments of the present application, the porosity difference between the first base film 11 and the second base film 12 is utilized, such that the double-layered separator formed by stacking the first base film 11 and the second base film 12 not only ensures the mechanical strength of the separator but also facilitates improved ion mobility.

In some embodiments, the ratio of the porosity of the first base film 11 to the porosity of the second base film 12 is greater than or equal to 1.02. In an exemplary embodiment, the ratio of the porosity of the first base film 11 to the porosity of the second base film 12 may be 1.02 to 3.0, and the separator formed by combining the first base film 11 and the second base film 12 having such a ratio of porosities is more favorable for ion migration.

Further, the porosity of the first base film 11 is greater than the porosity of the second base film 12, and the porosity of the first base film 11 is 32% to 90%, and the porosity of the second base film 12 is 30% to 85%. In an exemplary embodiment, the porosity of the first base film 11 may be such a typical but non-limiting porosity as 32%, 35%, 36%, 40%, 45%, 48%, 50%, 52%, 54%, 58%, 60%, 65%, 68%, 70%, 72%, 78%, or 80%. In an exemplary embodiment, the porosity of the second base film 12 may be such a typical but non-limiting porosity as 30%, 32%, 35%, 36%, 40%, 45%, 48%, 50%, 52%, 54%, 58%, 60%, 65%, 68%, 70%, 72%, or 75%. Under the above porosity ratio conditions, combining the first base film 11 with a porosity of 32% to 90% and the second base film 12 with a porosity of 30% to 85% can enrich the pore structure, which not only facilitates ion migration, but also enables the separator to exhibit excellent overall air permeability and mechanical property.

In some embodiments, the porosity of the first base film 11 is greater than the porosity of the second base film 12, and the porosity of the first base film 11 is 35% to 85% and the porosity of the second base film 12 is 34% to 45%. Combining the first base film 11 with a porosity of 35% to 85% and the second base film 12 with a porosity of 34% to 45% can enable the separator to exhibit good comprehensive effect with respect to overall mechanical property, air permeability, and ion mobility.

In some embodiments, the thickness of the first base film 11 is greater than the thickness of the second base film 12. By using the thickness difference between the first base film 11 and the second base film 12, the overall mechanical strength of the separator can be well balanced, enabling the separator to be used for a long time in a battery.

In some embodiments, the ratio of the thickness of the first base film 11 to the thickness of the second base film 12 is 1.02 to 5.0. In an exemplary embodiment, the ratio of the thickness of the first base film 11 to the thickness of the second base film 12 may be 1.02, 1.5, 2.0, 2.2, 2.6, 2.8, 3.0, 3.2, 3.5, 3.8, 3.9, 4.0, 4.2, 4.6, 4.8, 5.0, or the like.

In some embodiments, the thickness of the first base film 11 is greater than the thickness of the second base film 12, and the thickness of the first base film 11 is 2 µm to 13 µm and the thickness of the second base film 12 is 1 µm to 12 µm. In an exemplary embodiment, the thickness of the first base film 11 may be such a typical but non-limiting thickness as 2 µm, 2.5 µm, 3 µm, 3.5 µm, 4 µm, 4.5 µm, 5 µm, 6 µm, 7 µm, 8 µm, 9 µm, 10 µm, 11 µm, 12 µm, or 13 µm. In an exemplary embodiment, the thickness of the second base film 12 may be such a typical but non-limiting thickness as 1 µm, 2 µm, 2.5 µm, 3 µm, 3.5 µm, 4 µm, 4.5 µm, 5 µm, 6 µm, 7 µm, 8 µm, 9 µm, 10 µm, 11 µm, or 12 µm. Combining the first base film 11 with a thickness of 2 µm to 13 µm and the second base film 12 with a thickness of 1 µm to 12 µm not only allows the whole separator to exhibit good mechanical property, but also allows the ceramic and the flame retardant in the coating 13 in the middle to be well protected and thereby not prone to fall off.

In some embodiments, the thickness of the first base film 11 is greater than the thickness of the second base film 12, and the thickness of the first base film 11 is 3 µm to 6 µm and the thickness of the second base film 12 is 2 µm to 5 µm. Combining the first base film 11 with a thickness of 3 µm to 6 µm and the second base film 12 with a thickness of 2 µm to 5 µm not only allows the separator to exhibit good overall mechanical property and allows the ceramic and the flame retardant in the coating 13 in the middle to be not prone to fall off, but also can greatly improve the energy density of the battery when used in the battery.

In some embodiments, the thickness of the coating 13 is 0.5 µm to 10 µm. In an exemplary embodiment, the thickness of the coating 13 may be such a typical but non-limiting thickness as 0.5 µm, 1 µm, 2 µm, 2.5 µm, 3 µm, 3.5 µm, 4 µm, 4.5 µm, 5 µm, 6 µm, 7 µm, 8 µm, 9 µm, 10 µm, or the like. Allowing the coating thickness of the coating 13 between the first base film 11 and the second base film 12 to be 0.3 µm to 10 µm can enable the separator to exhibit good comprehensive effect with respect to overall wettability and heat resistance.

In some embodiments, the thickness of the coating 13 is 1 µm to 5 µm. Allowing the thickness of the coating 13 between the first base film 11 and the second base film 12 to be 1 µm to 5 µm can enable the separator to exhibit good comprehensive effect with respect to overall wettability and heat resistance and also to exhibit excellent overall air permeability.

In some embodiments, the coating 13 further contains a binder. Specifically, the coating 13 includes ceramic, a flame retardant, and a binder. By using the binder in the coating 13 in the middle, the binder can bind and fix the ceramic and the flame retardant in the coating 13, such that the ceramic and the flame retardant do not easily fall off.

In some embodiments, the coating 13 includes ceramic, a flame retardant, and a binder including at least one of polyacrylate, acrylic acid, and carboxymethyl cellulose. The above types of binders exhibit excellent adhesion, enabling them to effectively bind the ceramic and the flame retardant in the coating 13.

In some embodiments, the coating 13 includes ceramic, a flame retardant, and a binder, and the mass ratio of the binder to the ceramic is (0.01-0.3):1. In an exemplary embodiment, the mass ratio of the binder to the ceramic may be 0.05:1, 0.15:1, 0.2:1, 0.25:1, 0.3:1, or the like. Under the above ratio conditions, the binder demonstrates strong adhesion to the ceramic in the coating 13, while having a small influence on the thickness of the coating 13.

In some embodiments, the separator includes a first base film 11, a second base film 12, and a coating 13. The ratio of the porosity of the first base film 11 to the porosity of the second base film 12 may be 1.02 to 3.0, and the porosity of the first base film 11 is 35 % to 85% and the porosity of the second base film 12 is 34% to 45%. The ratio of the thickness of the first base film 11 to the thickness of the second base film 12 is 1.02 to 5.0, the thickness of the first base film 11 is 3 µm to 6 µm, and the thickness of the second base film 12 is 2 µm to 5 µm. The thickness of the coating 13 is 1 µm to 5 µm, and the coating contains ceramic, a flame retardant, and a binder; the ceramic is ceramic particles with an average particle size of 0.05 µm to 0.5 µm, the flame retardant is flame-retardant particles with an average particle size of 0.05 µm to 1 µm, and the mass ratio of the ceramic to the flame retardant to the binder is 8:2:1. Such a separator exhibits better comprehensive effect with respect to the mechanical property, air permeability, thermal stability and ion mobility.

### Preparation Method for Separator

In a second aspect, embodiments of the present application provide a preparation method for a separator. As shown in FIG. 2, the preparation method for the separator includes the following steps:
S01: formulating a slurry containing ceramic and a flame retardant; and
S02: applying the slurry on the surface of a first base film 11 to form a slurry coating, then covering the slurry coating with a second base film 12, and performing lamination treatment to obtain the separator.

In the embodiments of the present application, a wet coating film forming process is adopted. The slurry containing ceramic and a flame retardant is applied on the surface of the first base film 11 to form a slurry coating, then the slurry coating is covered with the second base film 12, and lamination treatment is performed to obtain the separator according to the embodiments of the present application. Such a preparation method not only features simple process and low preparation cost, but also can result in a separator with excellent ionic conductivity and high temperature resistance.

In some embodiments, the material types, porosities, and thicknesses of the first base film 11 and the second base film 12, and the material types and ratios of the ceramic and the flame retardant have been described in detail above.

In some embodiments, the step of formulating the slurry containing the ceramic and the flame retardant includes: dissolving the ceramic and the flame retardant in water, adding a binder, and stirring to obtain the slurry. The addition of the binder to the slurry can provide the slurry with good viscosity, and the ceramic and the flame retardant in the slurry can be better bonded to form a film between the first base film 11 and the second base film 12.

In some embodiments, the mass concentration of the ceramic in the slurry is 50% to 90%, and in an exemplary embodiment, the mass concentration of the ceramic may be such a typical but non-limiting mass concentration as 50%, 52%, 54%, 58%, 60%, 65%, 68%, 70%, 72%, 78%, 80%, 85%, 90%, or the like. The mass concentration of the flame retardant in the slurry is 10% to 50%, and in an exemplary embodiment, the mass concentration of the flame retardant may be such a typical but non-limiting mass concentration as 10%, 12%, 14%, 18%, 20%, 25%, 28%, 30%, 32%, 38%, 40%, 45%, 50%, or the like. In the slurry with the above mass concentration, the ceramic and the flame retardant are uniformly dispersed, and the prepared slurry can be easily applied to form a film.

In some embodiments, the binder added to the slurry includes at least one of polyacrylate, acrylic acid, and carboxymethyl cellulose. The proportion of the binder in the slurry is based on the mass ratio of the binder to the ceramic in the coating 13 after film formation being (0.01-0.3):1. The above types of binders exhibit excellent viscosity, such that the ceramic and the flame retardant in the middle of the final separator do not easily fall off. Under the above ratio conditions, the adhesion effect is good, and meanwhile the influence on the thickness of the final coating is small.

In some embodiments, the lamination treatment includes a roller pressing lamination treatment. Through roller pressing laminating, the first base film, the second base film, and the coating in the middle can be well laminated. The slurry coating formed by applying the slurry on the surface of the first base film 11 contains water to dissolve, and thus the formed slurry coating was then dried to remove the solvent and thereby form a solvent-removed coating 13, such that the two film layers and the coating 13 in the middle are sufficiently laminated.

### Battery

In a third aspect, embodiments of the present application provide a battery. The battery includes a positive electrode, a negative electrode, and a separator disposed between the positive electrode and the negative electrode, and the separator is the separator provided by the first aspect of the embodiments of the present application and/or the separator prepared by using the preparation method provided by the second aspect of the embodiments of the present application.

By using the separator provided by the first aspect of the embodiments of the present application and/or the separator prepared by using the preparation method provided by the second aspect of the embodiments of the present application in a battery, based on the high ionic conductivity and the remarkable high temperature resistance of the separator, the battery can have an excellent capacity retention rate and thereby has charge-discharge cycle stability, and meanwhile has excellent safety performance and service life.

The first base film 11 of the separator may be adjacent to the positive electrode, and the second base film 12 may be adjacent to the negative electrode. Alternatively, the first base film 11 of the separator may be adjacent to the negative electrode, and the second base film 12 may be adjacent to the positive electrode.

In some embodiments, the battery is a secondary battery. In an exemplary embodiment, the secondary battery may be an ion battery, a sodium ion battery, or the like, and the secondary battery according to the embodiments of the present application has high energy density and good cycle stability, and is well used as a power source of a power battery or an energy storage system based on the advantages of the separator according to the embodiments of the present application.

In some embodiments, the secondary battery according to the embodiments of the present application may include any one of a battery cell, a battery module, and a battery pack.

The battery cell includes a battery housing and a battery core packaged in the battery housing. The shape of the battery cell is not particularly limited, and it may have a cylindrical shape, a prismatic shape, or any other shape. A battery cell 20 of a prismatic structure is shown in FIG. 3.

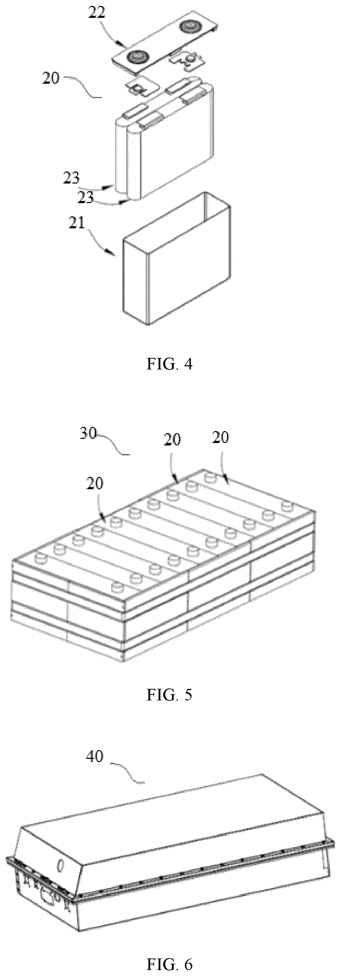

In some embodiments, as shown in FIG. 4, the outer packaging of the battery cell 20 may include a housing 21 and a top cover assembly 22. The housing 21 may include a bottom plate and side plates connected to the bottom plate, and the bottom plate and the side plates define, in an enclosing manner, an accommodating cavity. The housing 21 is provided with an opening communicating with the accommodating cavity, and the top cover assembly 22 is configured to lid the opening to seal the accommodating cavity. The positive electrode, the separator, and the negative electrode plate included in the secondary battery according to the embodiments of the present application may be formed into an electrode assembly 23 through a winding process and/or a stacking process. The electrode assembly 23 is packaged in the accommodating cavity. The electrolyte is infiltrated into the electrode assembly 23. The number of electrode assemblies 23 included in the battery cell 20 may be one or more and may be adjusted as needed in practice.

Preparation methods for the battery cell 20 are well known. In some embodiments, the positive electrode, the separator, and the negative electrode plate, and the electrolyte may be assembled to form the battery cell 20. As an example, the battery cell 20 may be obtained by subjecting the positive electrode, the separator, and the negative electrode plate to a winding process or a stacking process to form an electrode assembly 23, placing the electrode assembly 23 in an outer packaging, injecting an electrolyte into the outer packaging after drying, and then performing vacuum packaging, standing, formation, shaping, and other procedures.

The battery module is formed by assembling the battery cells 20, that is, the battery module may include a plurality of battery cells 20, and the specific number may be adjusted according to the application and the capacity of the battery module.

In some embodiments, FIG. 5 is a schematic diagram of a battery module 30 as one example. As shown in FIG. 5, in the battery module 30, a plurality of battery cells 20 may be sequentially arranged in a length direction of the battery module 30. Certainly, the arrangement may also be in any other manner. Further, the plurality of battery cells 20 may be fixed by a fastener. Optionally, the battery module 30 may further include a shell having an accommodating space in which the plurality of battery cells 20 are accommodated.

The battery pack is formed by assembling the above battery cells 20, that is, the battery pack may include a plurality of battery cells 20, where a plurality of the battery cells 20 may be assembled into the above battery module 30. The specific number of battery cells 20 or battery modules 30 included in the battery pack may be adjusted according to the application and the capacity of the battery pack.

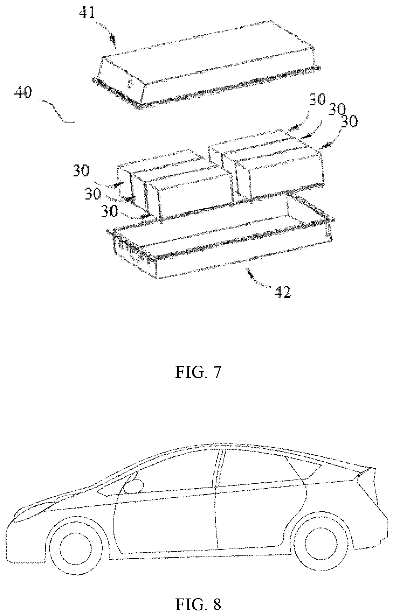

As shown in embodiments, FIG. 6 and FIG. 7 are schematic diagrams of a battery pack 40 as one example. The battery pack 40 may include a battery case and a plurality of battery modules 30 arranged in the battery case. The battery case includes an upper case body 41 and a lower case body 42. The upper case body 41 is configured to lid the lower case body 42 and form a closed space for accommodating the battery modules 30. The plurality of battery modules 30 may be arranged in any manner in the battery case.

### Electric Device

In a fourth aspect, embodiments of the present application further provide an electric device. The electric device includes the battery according to the above embodiments of the present application. The battery may be used as a power source for the electric device, or as an energy storage unit for the electric device. Therefore, the electric device according to the embodiments of the present application features high capacity retention rate and good use stability and safety.

The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like. A secondary battery, a battery module, or a battery pack may be selected based on the use requirements of the electric device.

FIG. 8 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

As another example, the electric device may be a mobile phone, a tablet computer, a notebook computer, or the like. The electric device is generally required to be light and thin, and a secondary battery can thus be used as the power source.

### Examples

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### 1. Examples of separator and preparation method therefor

### Example A1

A separator includes a first base film 11, a second base film 12, and a coating 13 positioned between the first base film 11 and the second base film 12. The material of the first base film 11 is polypropylene (PP), the thickness is 5 µm, and the porosity is 48%; the material of the second base film 11 is polyethylene (PE), the thickness is 3 µm, and the porosity is 50%; the thickness of the coating 13 is 0.5 µm, and the coating contains ceramic, a flame retardant, and a binder, where the ceramic is aluminum oxide particles with an average particle size of 0.01 µm, the flame retardant is calcium metaborate with an average particle size of 0.02 µm, the binder is carboxymethyl cellulose, and the mass ratio of the ceramic to the flame retardant to the binder is 8:2:1. See Table 1 for details.

### The preparation method for the separator includes the following steps:

S11: adding the ceramic, the flame retardant, and the binder to water according to a ratio, and stirring to obtain a slurry.

S12: applying the slurry obtained in the previous step on the first base film 11 to form a slurry coating, then covering the slurry coating with the second base film 12, performing roller press lamination, and then drying to obtain a finished separator product.

### Example A2

A separator includes a first base film 11, a second base film 12, and a coating 13 positioned between the first base film 11 and the second base film 12. See Table 1 for the materials of the layers. The preparation method for the separator is similar to that in Example A1.

### Example A3

A separator includes a first base film 11, a second base film 12, and a coating 13 positioned between the first base film 11 and the second base film 12. See Table 1 for the materials of the layers. The preparation method for the separator is similar to that in Example A1.

### Example A4

A separator includes a first base film 11, a second base film 12, and a coating 13 positioned between the first base film 11 and the second base film 12. See Table 1 for the materials of the layers. The preparation method for the separator is similar to that in Example A1.

### Example A5

A separator includes a first base film 11, a second base film 12, and a coating 13 positioned between the first base film 11 and the second base film 12. See Table 1 for the materials of the layers. The preparation method for the separator is similar to that in Example A1.

### Example A6

A separator includes a first base film 11, a second base film 12, and a coating 13 positioned between the first base film 11 and the second base film 12. See Table 1 for the materials of the layers. The preparation method for the separator is similar to that in Example A1.

### Example A7

A separator includes a first base film 11, a second base film 12, and a coating 13 positioned between the first base film 11 and the second base film 12. See Table 1 for the materials of the layers. The preparation method for the separator is similar to that in Example A1.

### Example A8

A separator includes a first base film 11, a second base film 12, and a coating 13 positioned between the first base film 11 and the second base film 12. See Table 1 for the materials of the layers. The preparation method for the separator is similar to that in Example A1.

### Comparative Example A1

A separator includes a first base film 11 and a coating 13 on the surface of the first base film 11. See Table 1 for the materials of the layers.

### Comparative Example A2

A separator includes a second base film 12 and a coating 13 on the surface of the second base film 12. See Table 1 for the materials of the layers.

### Comparative Example A3

A separator includes a first base film 11, a second base film 12, and a coating 13 positioned between the first base film 11 and the second base film 12. See Table 1 for the materials of the layers.

### Comparative Example A4

A separator includes a first base film 11, a second base film 12, and a coating 13 positioned between the first base film 11 and the second base film 12. See Table 1 for the materials of the layers.

### 2. Examples of secondary battery cell

### Example B1

A secondary battery cell includes a battery core formed by a positive electrode plate, a separator, and a negative electrode plate and also includes an electrolyte. The separator is the separator provided in Example A1. The preparation method for the secondary battery includes the following:

Preparing a positive electrode plate: with methylpyrrolidone (NMP) used as the solvent, LiNi_{0.8}Co_{0.1}Mn_{0.1}O₂, carbon nanotube (CNT), and a binder (PVDF) were mixed in a mass ratio of 97:2:1 to prepare a positive electrode slurry with a solid content of 80%, and the positive electrode slurry was uniformly applied on both sides of an aluminum foil, with the surface density of each single side being 0.112 mg/mm², followed by sufficient drying, cold pressing, and slitting to obtain a positive electrode plate serving as the positive electrode;

Preparing a negative electrode plate: with water as the solvent, the artificial graphite, a conductive agent SP, a dispersant (CMC), and a binder (SBR) were mixed in a mass ratio of 96:1:1:2 to prepare a negative electrode slurry with a solid content of 58%, and the positive electrode slurry was uniformly applied on both sides of an aluminum foil, with the surface density of each single side being 0.170 mg/mm², followed by sufficient drying, cold pressing, and slitting to obtain a negative electrode plate serving as the negative electrode;

Electrolyte: ethylene carbonate (EC)/diethyl carbonate (DEC) were mixed at room temperature in a volume ratio of 1:1, and LiPF₆ was added to the mixed solution to obtain a solution with a concentration of 1mol/L serving as the electrolyte;

Assembling the secondary battery: in a low-humidity constant-temperature room, the positive and negative electrode plates prepared as above are stacked in the order of "positive electrode-separator-negative electrode" and then wound to form a bare battery core, and then the electrolyte was injected, thus obtaining the lithium-ion secondary battery by assembling.

Example B1 to Example B8 and Comparative Example B1 to Comparative Example B4

Example B1 to Example B8 and Comparative Example B1 to Comparative Example B4 each provide a secondary battery cell, and each secondary battery cell includes a battery core formed by a positive electrode plate, a separator, and a negative electrode plate and also includes an electrolyte. The separators of Example B1 to Example B8 and Comparative Example B1 to Comparative Example B4 correspond to the separators provided in Example A1 to Example A8 and Comparative Example A1 to Comparative Example A4, respectively. The separator from Example A1 is used as the separator in the battery core of the secondary battery Example B1, the separator from Example A2 is used as the separator in the battery core of the secondary battery Example B2, and so on. Similarly, the separator from Comparative Example A4 is used as the separator in the battery core of the battery Comparative Example B4.

### Performance Testing

The separators and the secondary battery cells of the above Examples and Comparative Examples were separately tested.

### (1) Test on ion mobility of separator:

The prepared separator was cut into circular membrane discs, and button batteries were assembled using stainless steel sheets as the counter electrode. The electrochemical AC impedance of the button batteries was then measured to obtain the resistance value. The ionic conductivity of the separator was calculated according to the following formula: σ = L/(R × S), where: σ is the ionic conductivity, L is the thickness of the separator, R is the resistance value, and S is the area of the separator.

### (2) Test on heat resistance of separator:

Sample preparation: The prepared separator was cut into samples with a width of 50 mm and a length of 100 mm along the TD and MD direction using a punching machine, five parallel samples were placed on a piece of A4 paper, and the sample-carrying A4 paper was then placed on corrugated cardboard with a thickness of 1 mm to 5 mm.

Sample testing: The temperature of the forced-air oven was set to 150 °C; after the temperature stabilized and was maintained for 30 min, the A4 paper placed on corrugated cardboard was placed inside the oven, and the timer was started; upon reaching the set time (1 h in the present application), the length and width of the separator were measured and recorded as a and b, respectively.

Calculation of thermal shrinkage: machine direction (MD) thermal shrinkage = [(100 - a)/100] × 100%, transverse direction (TD) thermal shrinkage = [(50 - b)/50] × 100%, and the average value of the five parallel samples was taken as the test result.

### (3) Test on air permeability of separator:

A separator sample of appropriate size was obtained by cutting and fixed on an air permeability tester for separators, and 100 mL (1 mL = 1 cc) of air's passing through the separator with an area of 642 mm² under an applied pressure of 1.21 kPa was tested. The time required for the air to pass through the separator was the air permeability (sec/100 cc) of the separator.

The test results of the separators are shown in Table 1.

**Table 1**

| | First base film 11 | | | Second base film 12 | | | Coating 13 | | | Ion mobility (S/m) | Thermal shrinkage (%) | Air permeability (sec/100 cc) |
|---|---|---|---|---|---|---|---|---|---|---|---|---|
| | Material | Thickness (µm) | Porosity | Material | Thickness (µm) | Porosity | Ceramic | Flame retardant | Thickness (µm) | | | |
| Example Al | PP | 5 | 48% | PE | 3 | 50% | 0.01 µm Al₂O₃: 8 parts | 0.02 µm CaB₂O₄: 2 parts | 0.5 | 1.25 | 0.45 | 205 |
| Example A2 | PP | 13 | 32% | PE | 12 | 30% | 1 µm Al₂O₃: 8 parts | 2 µm CaB₂O₄: 2 parts | 10 | 0.95 | 0.15 | 230 |
| Example A3 | PP | 6 | 45% | PE | 5 | 40% | 0.5 µm Al₂O₃: 8 parts | 1 µm CaB₂O₄: 2 parts | 5 | 1.12 | 0.35 | 235 |
| Example A4 | PP | 6 | 45% | PE | 5 | 40% | 0.5 µm Al₂O₃: 6 parts | 1 µm CaB₂O₄: 4 parts | 5 | 1.15 | 0.6 | 230 |
| Example A5 | PP | 6 | 45% | PE | 5 | 40% | 0.5 µm Boehmite: 8 parts | 1 µm ZnB₂O₄: 2 parts | 5 | 1.13 | 0.4 | 225 |
| Example A6 | PP | 6 | 45% | PE | 5 | 40% | 0.5 µm Barium titanate: 8 parts | 1 µm MgB₂O₄: 2 parts | 5 | 1.10 | 0.5 | 220 |
| Comparative Example A1 | Single-layer separator, made of PP, 5 µm in thickness, and 48% in porosity | | | | | | 0.01 µm Al₂O₃: 8 parts | 0.02 µm CaB₂O₄: 2 parts | 0.5 | 1.05 | 2.0 | 235 |
| Comparative Example A2 | Single-layer separator, made of PE, 12 µm in thickness, and 30% in porosity | | | | | | 1 µm Al₂O₃: 8 parts | 2 µm CaB₂O₄: 2 parts | 5 | 0.85 | 0.85 | 245 |
| Comparative Example A3 | PP | 6 | 45% | PE | 5 | 40% | - | 1 µm CaB₂O₄: 10 parts | 5 | 1.00 | 2.5 | 250 |
| Comparative Example A4 | PP | 6 | 45% | PE | 5 | 40% | 0.5 µm Al₂O₃: 10 parts | - | 5 | 0.7 | 0.5 | 240 |

As can be seen from the test results in Table 1:

Compared with the separators of the Comparative Examples, the separators of the Examples of the present application exhibit better ion mobility and lower thermal shrinkage rate and air permeability. In the examples of the present application, the combining of two base films with appropriate porosity enables the composite separator to maintain a certain level of porosity while achieving a relatively high mechanical strength; the ceramic particles and the flame retardant are incorporated within the coating between the two base films, the ceramic imparts excellent heat resistance to the separator, while the flame retardant synergizes with the ceramic to further improve the ionic conductivity of the separator, and the two are mutually reinforcing and together enhance both the thermal stability and ion mobility of the separator.

### (4) Cycle performance test of battery at room temperature:

The secondary battery cells of Example B1 to Example B8 and Comparative Example B1 to Comparative Example B4 were each discharged at a constant current of 1 C to an end voltage, left to stand for 10 min, and then charged at a constant current of 1 C and a constant voltage, and the charging was terminated when the cutoff current was 0.02 C. The cycle was repeated 500 times, the first discharge capacity was taken as C1, the 500^{th} discharge capacity was taken as C2, and the discharge capacity retention rate was obtained by calculating based on the following formula: discharge capacity retention rate = C2/C1.

### (5) Test on high-temperature heat resistance of battery:

The fully-charged battery was placed in an oven at 150 °C for high-temperature heating for 1 h. During the heating process, if the battery experienced a short circuit, fire, or explosion, it indicated poor heat resistance of the separator. Conversely, if no fire or explosion occurred, the separator demonstrated relatively good thermal stability.

The test results of the batteries are shown in Table 2.

**Table 2**

| Example | Capacity retention rate | Battery heating at 150 °C |
|---|---|---|
| Example B1 | 97% | Not on fire |
| Example B2 | 92% | Not on fire |
| Example B3 | 93% | Not on fire |
| Example B4 | 96% | Not on fire |
| Example B5 | 94% | Not on fire |
| Example B6 | 93% | Not on fire |
| Comparative Example B1 | 91% | Fire ignited but quickly subsided |
| Comparative Example B2 | 90% | Fire ignited but quickly subsided |
| Comparative Example B3 | 92% | Fire ignited but quickly subsided |
| Comparative Example B4 | 85% | Not on fire |

As can be seen from the test results in Table 2:

The batteries provided by the Examples of the present application exhibit better capacity retention rate and safety performance than those of the Comparative Examples. Since the ceramic particles and flame retardant in the separator's coating were present between two base films, in one aspect, the ceramic particles endow the separator with excellent heat resistance, significantly enhancing the battery's heat-resistant safety performance while also maintaining superior electrolyte absorption and retention capabilities, and in another aspect, the flame retardant not only provides flame retardation but also synergizes with the ceramic particles to further improve the separator's ionic conductivity, thereby increasing the battery's capacity retention rate. Therefore, through comprehensive utilization of the ceramic particles and flame-retardant particles, the battery can achieve high capacity retention rate, high safety performance, and extended service life at the same time.

Finally, it should be noted that the above examples are only used to illustrate the technical solutions of the present application, rather than limit same. Although the present application has been described in detail with reference to the foregoing examples, those of ordinary skill in the art will appreciate that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and specification of the present application. In particular, the technical features mentioned in the examples can be combined in any manner, provided that there is no structural conflict. The present application is not limited to particular examples disclosed herein but includes all the technical solutions that fall within the scope of the claims.

## Claims

1. A separator, comprising: a first base film, a second base film, and a coating positioned between the first base film and the second base film, the coating comprising ceramic and a flame retardant.

2. The separator according to claim 1, wherein the ceramic comprises ceramic particles with an average particle size of 0.01 µm to 1 µm; and/or
the flame retardant comprises flame-retardant particles with an average particle size of 0.02 µm to 2 µm.

3. The separator according to claim 2, wherein the ceramic comprises ceramic particles with an average particle size of 0.05 µm to 0.5 µm; and/or
the flame retardant comprises flame-retardant particles with an average particle size of 0.05 µm to 1 µm.

4. The separator according to any one of claims 1 to 3, wherein a material of the ceramic comprises at least one of boehmite, aluminum oxide, barium sulfate, magnesium oxide, magnesium hydroxide, silica, tin dioxide, titanium oxide, calcium oxide, zinc oxide, zirconium oxide, yttrium oxide, cerium oxide, zirconium titanate, barium titanate, and magnesium fluoride; and/or
the flame retardant comprises at least one of a metaborate salt, an orthoborate salt, and a polyborate salt.

5. The separator according to claim 4, wherein the metaborate salt comprises at least one of calcium metaborate, barium metaborate, sodium metaborate, and ammonium metaborate; or
the orthoborate salt comprises zinc borate; or
the polyborate salt comprises at least one of ammonium pentaborate and sodium tetraborate.

6. The separator according to any one of claims 1 to 5, wherein a mass ratio of the ceramic to the flame retardant is greater than or equal to 1.05.

7. The separator according to claim 6, wherein the mass ratio of the ceramic to the flame retardant is (1.05-9): 1.

8. The separator according to any one of claims 1 to 7, wherein base materials of the first base film and the second base film each independently comprise at least one of a polyolefin material, a fluoropolymer material, and a polyester material.

9. The separator according to any one of claims 1 to 8, wherein a porosity of the first base film is greater than a porosity of the second base film.

10. The separator according to claim 9, wherein a ratio of the porosity of the first base film to the porosity of the second base film is greater than or equal to 1.02; and/or
the porosity of the first base film is 32% to 90%, and the porosity of the second base film is 30% to 85%.

11. The separator according to claim 10, wherein the porosity of the first base film is 35% to 85%, and the porosity of the second base film is 34% to 45%.

12. The separator according to any one of claims 1 to 11, wherein a thickness of the first base film is greater than a thickness of the second base film.

13. The separator according to claim 12, wherein a ratio of the thickness of the first base film to the thickness of the second base film is (1.02-5.0):1; and/or
the thickness of the first base film is 2 µm to 13 µm, and the thickness of the second base film is 1 µm to 12 µm.

14. The separator according to claim 13, wherein the thickness of the first base film is 3 µm to 6 µm, and the thickness of the second base film is 2 µm to 5 µm.

15. The separator according to any one of claims 1 to 14, wherein a thickness of the coating is 0.5 µm to 10 µm.

16. The separator according to claim 15, wherein the thickness of the coating is 1 µm to 5 µm.

17. The separator according to any one of claims 1 to 16, wherein the coating further comprises a binder.

18. The separator according to claim 17, wherein the binder comprises at least one of polyacrylate, acrylic acid, and carboxymethyl cellulose; and/or
a mass ratio of the binder to the ceramic is (0.01-0.3):1.

19. A preparation method for the separator according to any one of claims 1 to 16, comprising the following steps:
formulating a slurry containing the ceramic and the flame retardant; and
applying the slurry on a surface of the first base film to form a slurry coating, then covering the slurry coating with the second base film, and performing lamination treatment to obtain the separator.

20. The preparation method according to claim 19, wherein the step of formulating the slurry containing the ceramic and the flame retardant comprises: dissolving the ceramic and the flame retardant in water, then adding a binder, and stirring to obtain the slurry.

21. The preparation method according to claim 20, wherein the binder comprises at least one of polyacrylate, acrylic acid, and carboxymethyl cellulose; and/or
a mass ratio of the binder to the ceramic is (0.01-0.3): 1.

22. The preparation method according to any one of claims 19 to 21, wherein in the slurry, a mass concentration of the ceramic is 50% to 90%, and a mass concentration of the flame retardant is 10% to 50%.

23. A battery, comprising: a positive electrode, a negative electrode, and a separator disposed between the positive electrode and the negative electrode, the separator being the separator according to any one of claims 1 to 18 or the separator prepared using the preparation method according to any one of claims 19 to 22.

24. The battery according to claim 23, wherein the battery comprises a secondary battery.

25. An electric device, wherein the electric device comprises the battery according to claim 23 or 24.
